# EUROPEAN PATENT SPECIFICATION

(11) **EP 0 285 407 B1**
(45) Date of publication and mention of the grant of the patent: **22.09.1993**
(21) Application number: 88302865.6
(22) Date of filing: 30.03.1988
(51) Int. Cl.: F16H 59/06, F16H 9/18

(54) **A speed-shifting device**
Wechselgetriebe
Variateur de vitesse

(30) Priority: 31.03.1987 JP 78818/87; 20.08.1987 JP 208007/87
(43) Date of publication of application: 05.10.1988
(73) Proprietor: BANDO CHEMICAL INDUSTRIES, LIMITED, Hyogo-ku Kobe-shi (JP)
(72) Inventor: Miyata, Hirofumi, Hyogo-ku Kobe-shi (JP)
(74) Representative: Brooke-Smith, Fred

(56) References cited:
- FR-A- 2 292 158
- GB-A- 2 177 169
- US-A- 3 180 163
- US-A- 4 274 295
- PATENT ABSTRACTS OF JAPAN, vol. 8, no. 166 (M-314)[1603], 2nd August 1984; & JP-A-59 62 760 (SATO ZOKI K.K.) 10-04-1984

## Description

This invention relates to a variable speed pulley type speed-shifting device utilizing a belt drive as defined by the features in the preamble of claim 1 for use in motor cycles, agricultural implements, and the like.

Such a device is known from JP-A-59-62760 comprising a pair of an input and output shafts disposed parallel to each other, variable speed pulleys including fixed sideplates fixedly mounted on each shaft and axially slidable sideplates mounted on each shaft for rotation with the shaft and facing the fixed sideplates to form V-shaped belt grooves, and a belt member engaged in the belt grooves between the sideplates, so that the effective radius with the pulleys for the belt member can be changed by moving axially the movable sideplates of each pulley towards and away from the fixed sideplates, thereby to adjust the transmission ratio. Usually, axial movement of the above mentioned movable sideplates of each pulley is controlled by means of hydraulic equipment, necessitating the use of a hydraulic piping system. Also, there are problems in that the control of the working movable sideplates is complicated and requires a great deal of space. In this generic device the movable sideplates of variable pulleys are automatically operated. This arrangement has a pair of transmission shafts, male screw membranes axially non-slidably and rotatably mounted on the transmission shafts, female screw cylinders rotationally fixed to and axially slidable with the movable sideplates of the pulleys are engaged by the male screw membranes, so that the distance between the fixed and the movable sideplates is changed by rotating the male screw membranes to move the female screw cylinders. A servomotor actuates the rotation of the male screw membranes.

However, this proposal has problems in that controlling the operation of the servomotor and the construction of the device are complicated, the cost of installing the servomotor is high.

In order to attain these objects, the speed-shifting device of this invention as defined by the features of claim 1 is provided with a moving member composed of a screw member and the like for moving axially the movable sideplates of the variable speed pulleys, arranged so that by the relative rotation thereof on the transmission shaft the movable sideplates is moved axially by utilizing another speed-shifting pulley mechanism.

In one preferred arrangement according to the invention said second pulley member has an effective radius which is variable, said one of the pulley parts of said third pulley member has a fixed effective radius, said one other of said pulley parts of said third pulley member and said first pulley member have toothed pulley parts, said first belt comprising a V-belt tensioned by a spring-biased roller and said second belt comprising a timing belt, and the rotation of said first transmission shaft is transmitted to said moving member by adjusting the effective radius of said second pulley member with said first belt with shifted speed.

The second pulley member may be provided with a movable sideplate connected to the moving member through a cam mechanism and a fixed sideplate facing thereto. The cam mechanism may be composed of a drive cam solidly movably in axial direction and relatively rotatably mounted on the moving member as well as being connected axially movable and non-rotatably with a casing of the device, and a driving cam solidly movably in axial direction and relatively rotatably mounted on the movable sideplate, arranged so that the cams are connected in cam engagement with each other to move axially changeably in relative position by relative rotation.

In that case, there are two purposes. One is to reduce the handling force required when shifting speed in the manner that the link ratio as the ratio of a moving stroke of the driving pulley to that of an operating lever can be set up to be enlarged. The other one is to control but not to increase abruptly the handling force avoiding an axial movement of the moving member and the movable sideplate of the driven pulley when the operating lever is handled more quickly than a moving speed of the movable sideplate, since a cam face angle at the cam mechanism is settled by the stroke of the operating lever for speed-shifting and a moving range for speed-shifting at the driven pulley when the cam mechanism is utilized as a mechanism for adjusting the effective radius of the second pulley member to enlarge or to reduce.

In order to attain the above object, an arrangement may be adopted in which the second pulley member has first and second sideplates which are axially slidably movable relative to the first transmission shaft, and said first movable sideplate is connected with said moving member by screw engagement having a smaller screw pitch than between said moving member and said first transmission shaft, and said second movable sideplate being connected to an operating lever of the means for actuating operation of said mechanism, which lever serves to move said movable sideplate towards and away from said first movable sideplate, said speed-shifting pulley mechanism being arranged so that while said moving member is relatively rotated around the first transmission shaft and axially moved resulting from the transmission of the rotation of said second pulley member thereto with shifted speed through said belts by changing the effective radius of said second pulley member with said first belt in accordance with the distance between the movable sideplates thereof varied by operation of said operation lever, said speed-shifting pulley mechanism is stabilized on the constant speed condition in the manner that said first movable sideplate is moved towards and away from said second movable sideplate with smaller movement than that of moving member based on a difference of screw pitch between said screws of said first transmission shaft and of said movable sideplate to said moving member during speed-shifting condition thereof.

The second movable sideplate may be connected with the operating lever axially through a cam member which is moved by cam engagement with the casing of the device and a linking mechanism which is connected with the cam member.

In another arrangement of the speed-shifting pulley, the third pulley member is axially rotatably mounted on a shaft disposed parallel to the first and second transmission shafts.

The invention will now be described in more detail with reference by way of example to the accompanying drawings in which:

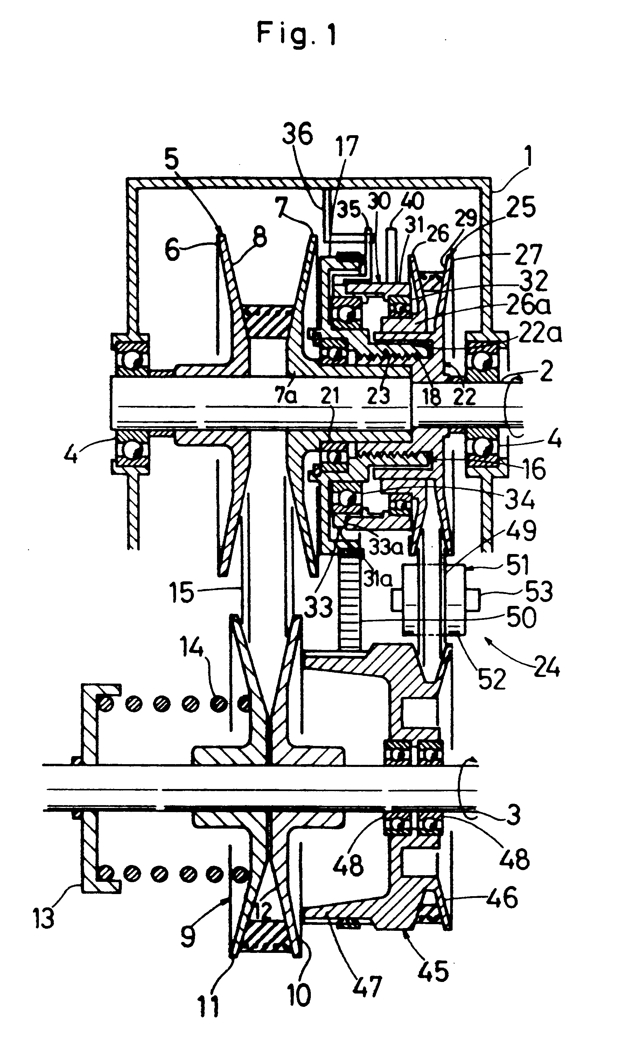

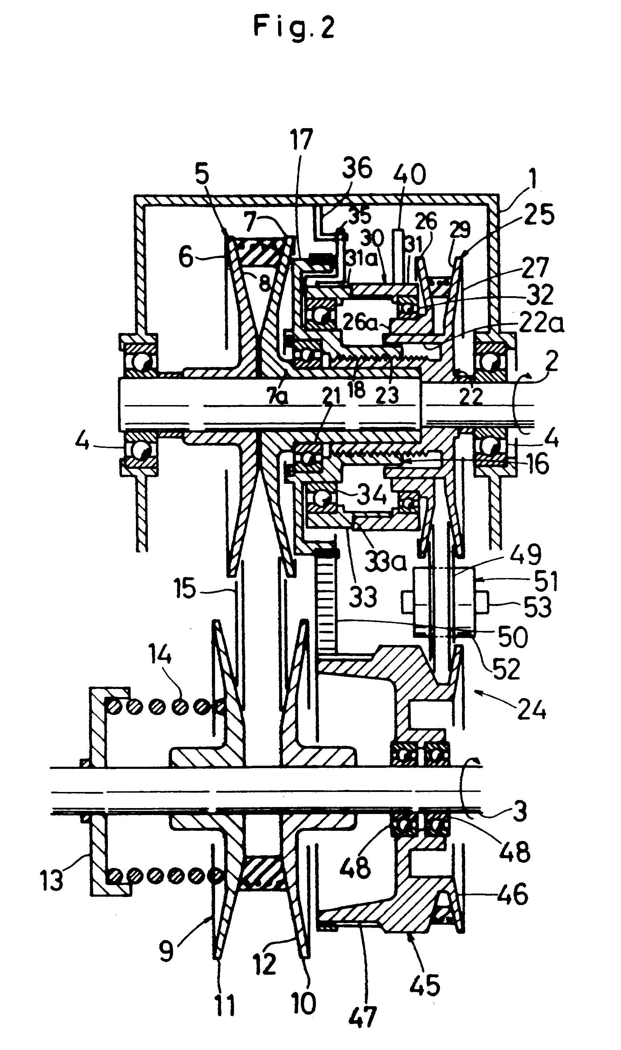

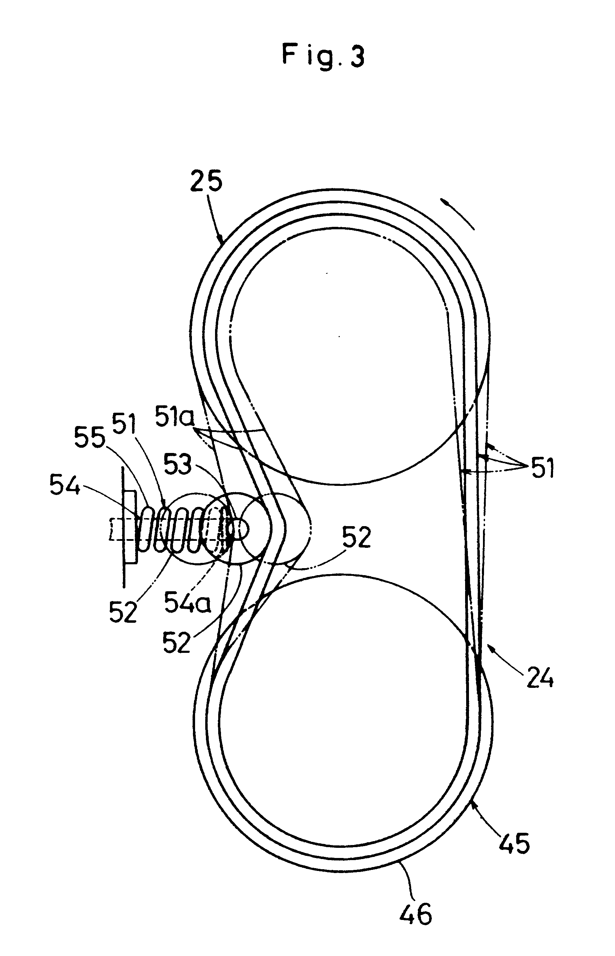

Fig.1 - Fig.3 show the first embodiment of this invention, wherein Fig.1 is a partly exploded elevation of a speed-shifting device at the low speed mode. Fig.2 is an elevation, partly exploded, of a speed-shifting device at the high speed mode. Fig. 3 is a side view showing the condition of a V-belt and a biased roller while speed shifting condition of a speed-shifting pulley mechanism, and

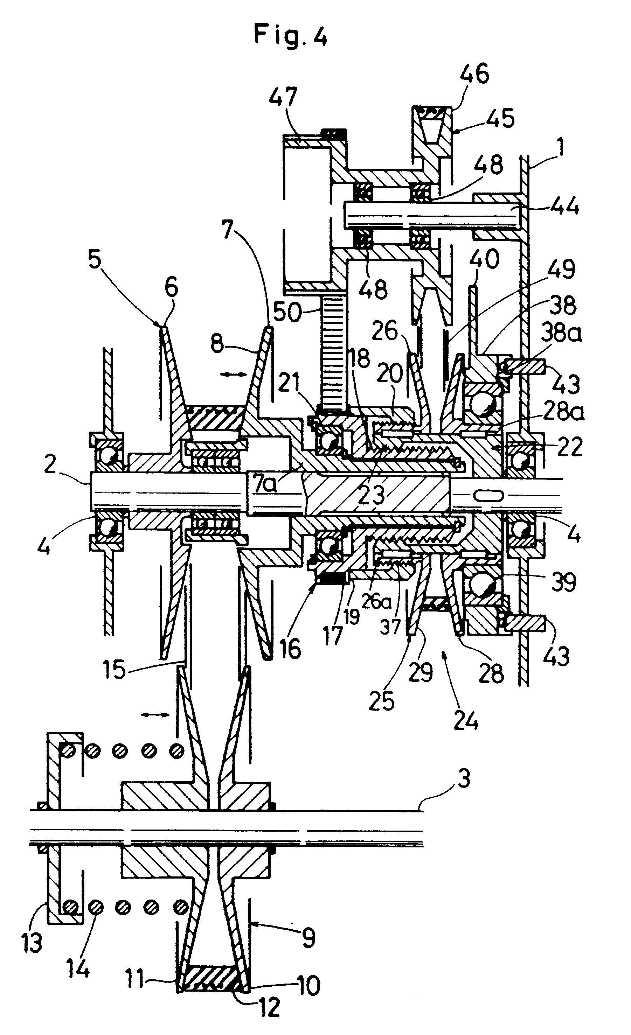

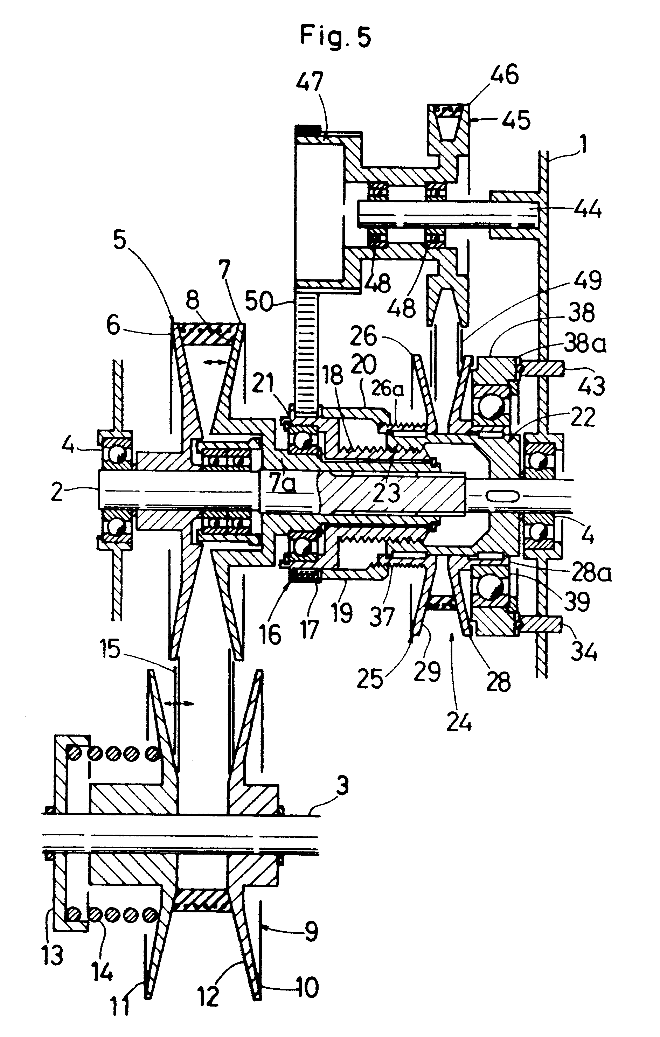

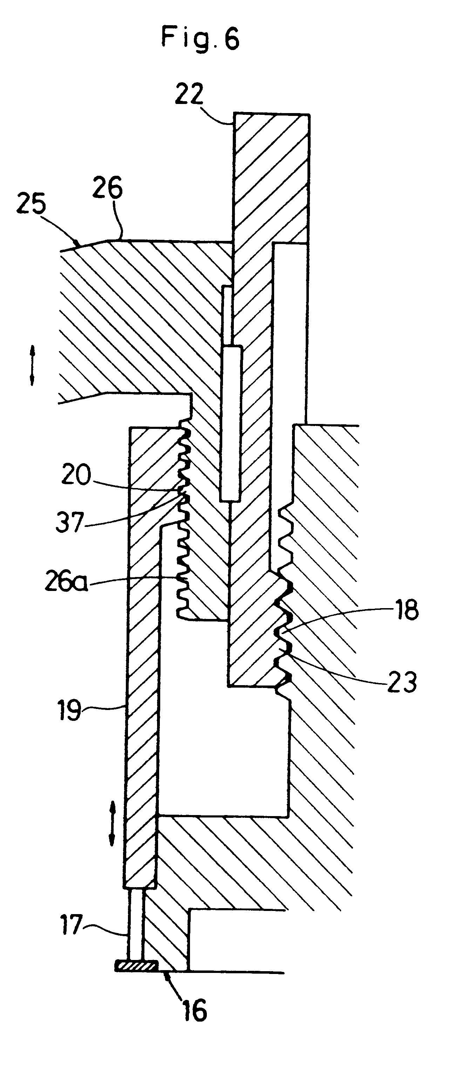

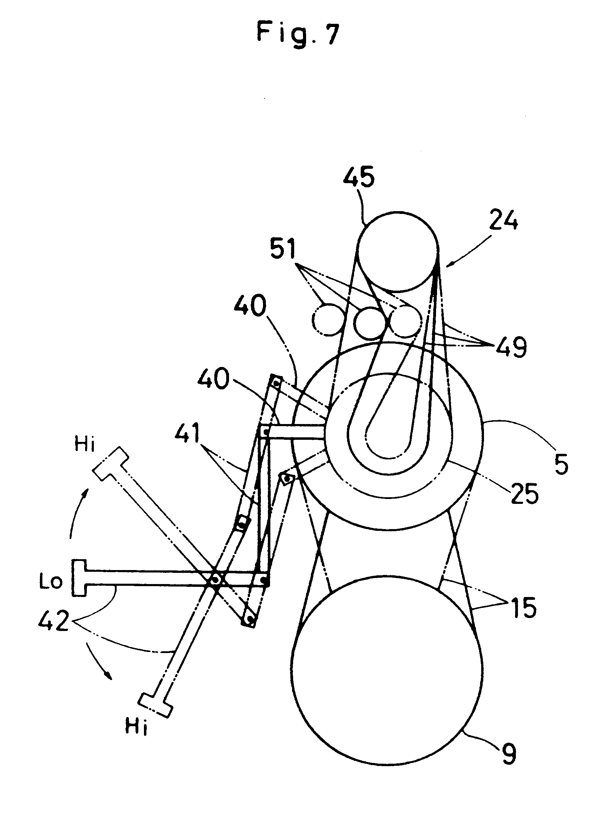

Fig.4 - Fig.7 show the second embodiment, wherein Fig.4 is an elevation, partly exploded, of a speed-shifting device at the low speed mode. Fig.5 is an elevation, partly exploded, of a speed-shifting device at the high speed mode. Fig.6 is an expanded sectional view of a principal part. Fig.7 is a side view showing a movement of the speed-shifting pulley mechanism and the biased roller accompanied with handling of an operating lever.

Fig.1 and Fig.2 show a first embodiment of this invention wherein an input shaft 2 forming a first transmission shaft and an output shaft 3 forming a second transmission shaft are disposed parallel to each other and are supported rotatably by a casing 1 of the device through ball bearings 4. A driving pulley 5 is provided on the input shaft 2. The driving pulley 5 is composed of a flange shaped fixed sideplate 6 solidly rotatably and axially non-slidably mounted on the input shaft 2 by means of a key or the like, and a flange shaped movable sideplate 7 axially slidably and solidly rotatably mounted on the input shaft 2 by means of a key or the like in a boss part 7a thereof so as to face to the fixed sideplate 6. Thus a V-shaped belt groove 8 is formed between the sideplates 6, 7.

A driven pulley 9 is mounted on the output shaft 3. This driven pulley 9 is arranged in the same way as the driving pulley 5, being composed of a flange shaped fixed sideplate 10 solidly rotatably and axially non-slidably mounted on the output shaft 3 by means of a key or the like and a flange shaped movable sideplate 11 axially slidably and solidly rotatably mounted by means of a key or the like on the output shaft 3 so as to face to the fixed sideplate 10 from the opposite direction to that in which the movable sideplate 7 faces the fixed sideplate 6 on the input shaft 3. A V-shaped groove is also formed between the sideplates 10, 11. Also, a spring retainer 13 is solidly rotatably and axially fixed on the output shaft 3 at the rear side of the movable sideplate 11 of the driven pulley 9. A spring 14 for biasing the movable sideplate 11 towards the fixed sideplate 10 (the rightward direction in the figure) is disposed between spring retainer 13 and the rear side of the movable sideplate 11. V-belt 15 is trained between the pulleys 3 and 7, engaging with both belt grooves 8, 12 thereof. The effective radius of the engagement of the V-belt 15 with both pulleys 3, 7 is adjustable by the movement of the movable sideplate 7 of the driving pulley 5 to and from the fixed sideplate 6. For example, when the movable sideplate 7 is moved towards the fixed sideplate 6, the transmission ratio between the shafts 2, 3 is increased resulting from the decrease of the effective radius of the driven pulley 9 relative to that of the driving pulley 5 since the movable sideplate 11 of the driven pulley 9 is moved away from the fixed sideplate 10 against the bias force of the spring 14 accompanied by an increase of the effective radius of the driving pulley 5 under the tension of the V-belt. On the other hand, when the movable sideplate 7 is moved from the fixed sideplate 6, the transmission ratio between both shafts 2, 3 is decreased, resulting from the increase of the effective radius of the driven pulley 9 relative to that of the driving pulley 5 since the movable sideplate 11 of the driven pulley 9 is moved to the fixed sideplate 10 by the bias force of the spring 14 accompanied by a decrease of the effective radius of the driving pulley 5.

A fixed sleeve 22 is solidly rotatably and axially non-slidably mounted on the input shaft 2 at the opposite side of the movable sideplate 7 to the fixed sideplate 6. A male screw-thread 23 is formed at the outer circumference of the fixed sleeve 22 and is in screw threaded engagement with a cylinder shaped moving member 16. The moving member 16 has an integrally formed flange facing towards the driven pulley 5, and a toothed pulley part 17 is formed on the outer circumference of the flange. Moreover, the moving member 16 is rotatably mounted on and axially fixed to a boss part 7a of the movable sideplate 7 of the driving pulley 5 through a ball bearing 21. The moving member 16 is arranged to be axially movable on the input shaft 2 with the movable sideplate 7 through screw action motion due to the relative rotation of the moving member 16 around the input shaft 2. For example, when the moving member 16 is relatively rotated reversely to the input shaft 2 the movable sideplate 7 is moved away from the fixed sideplate 6 (to the right in the figure). On the contrary, when the moving member 16 is relatively rotated in the advanced direction to the input shaft 2, the moving member 16 is moved in the direction (the left in the figure) with the movable sideplate 7 is moved towards the fixed sideplate 7.

Also, a speed-shifting pulley mechanism 24 is equipped for rotating the moving member 16 relatively around the input shaft 2. The speed-shifting pulley mechanism 24 is provided with a variable diameter pulley 25, constituting the second pulley member, comprising a sideplate 27 formed integrally with the boss part 22a, and a movable sideplate 26 axially slidably and solidly rotatably mounted on the cylindrical boss part 22a facing to the fixed sideplate 27. A V-shaped belt groove 29 is formed between both sideplates 26, 27.

The movable sideplate 26 is connected to the movable sideplate 7 of the driving pulley 5 through a cam mechanism 30. Namely, in a cam mechanism 30 a cylindrical first cam 31 having an inclined cam face 31a is rotatably and non-slidably mounted around the boss part 26a of the movable sideplate 26 through a ball bearing 32. On the other part, the second cam 33 is rotatably and non-slidably mounted at the middle part of the moving member 16 through a ball bearing 34, wherein an inclined cam face 33a is formed engaging with the inclined cam face 31a of the first cam 31. Namely, the first cam 31 and the second cam 33 are contacted with each other relatively rotatably and axially movably together changing the distance therebetween in accordance with contacting position. Also, the second cam 33 is mounted rotatably with but axially movably relative to the input shaft 2 and is engaged with the casing 1 through a stopping lever 35 extended outwardly from its outer circumference and a regulation lever 36 which is fixed on the casing 1. Also, a rod shaped connecting part 40 extends outwardly from the outer circumference of the first cam 31. The end of the connecting part 40 is connected to an operating lever (not shown) of manual operation type which is adapted for rotating the first cam 31 around the input shaft 2 and which is placed at the outside of the casing 1. The effective radius of the variable speed pulley 25 is changeable in the manner that the first cam 31 is rotated by handling the operating lever keeping cam engagement with the second cam 33 which is solidly mounted on the casing 1, then the first cam 31 is axially moved on the input shaft 2 through the cam engagement in accordance with the movement of the movable sideplate 26 towards and away from the fixed sideplate 27. Namely, both of the movable sideplates 26, 7 connected to the first or second cam 31, 33 are engaged with each other relatively movably changing the distance therebetween by a mode change of the operating lever.

Also, an axially fixed pulley 45 constituting the third pulley member is rotatably mounted on the output shaft 3 through ball bearings 48, 48. A V-pulley part 46 the effective radius of which corresponds to a medium value of a variable range of the effective radius of the variable pulley 25 is integrally formd on the pulley 45. A V-belt 49 constituting the first belt is trained between the pulley part 46 and pulley 25. Also, a toothed pulley part 47 the effective radius of which is nearly the same as that of the V-pulley part 46 is formed on the portion of the fixed pulley 45 adjacent the fixed sideplate 10. A toothed timing belt 50 constituting the second belt is trained between the toothed pulley part 47 and the toothed pulley part 17 of the moving member 16. In abovementioned arrangement, the moving member 16 is relatively rotated around the input shaft 2 by adjusting the rotational speed to the higher or lower speed than that of the input shaft 2 while rotating in the same direction as the input shaft 2.

Thus, the moving member 16 is rotated relative to the input shaft 2 in the advanced or reverse direction by handling the operating lever. When the device is to be shifted to the low speed mode, as shown in Fig. 1, for example, the moving member 16 is relatively rotated around the input shaft 2 in the reverse direction in the manner that the effective radius of the variable pulley 25 of the speed-shifting pulley mechanism 24 is decreased by handling the operating lever to decrease the transmission ratio between the variable pulley 25 and the V-pulley part 46 of the fixed pulley 45. In accordance with this operation, the effective radius of the driving pulley 5 is decreased by the movement of the movable sideplate 7 away from the fixed sideplate 6 through the screw motion of the moving member 16 engaged with the male screw 23 of the fixed sleeve 22. On the other hand, when the device is to be shifted to the high speed mode, as shown in Fig.2, the moving member 16 is relatively rotated around the input shaft 2 in the advance direction in the manner that the effective radius of the variable pulley 25 is increased to increase the transmission ratio between the variable pulley 25 and the V-pulley part 46 of the fixed pulley 45. In accordance with this operation, the effective radius of the driving pulley 5 is increased, caused by the movement of the movable sideplate 7 towards the fixed sideplate 6 through the screw motion of the moving member 16.

The toothed pulley part 47 of the pulley 45 has a sufficiently wide belt engaging face not to allow the belt 50 to slip off whenever the timing belt 50 at the toothed pulley part 17 is moved axially through the screw motion of the moving member 16.

Further, between the variable pulley 25 of the speed-shifting pulley mechanism 24 and the V-pulley part 46 of the fixed pulley 45 a bias mechanism 51 is provided for biasing a slack part 49a (a part moving from the variable pulley 25 to the V-pulley part 46) of the V-belt 49 from its outer side. A tension fluctuation of the V-belt 49 in accordance with adjusting of the effective radius of the variable pulley 25 is decreased by the bias mechanism 51. Concretely, the bias mechanism 51 is, as shown in Fig.3, provided with a cylindrical tension roller 52 placed in contact with the outer face of the V-belt 49 in the slack part 49a, a supporting shaft 53 placed parallel to both shafts 2, 3 axially rotatably supporting the tension roller 52, a pair of rods 54, 54 (only one of them is shown) solidly mounted to both end parts of the supporting shaft 53 movably supporting the tension roller 52 in a direction crossing at nearly right angle to the face through the input and output shafts 2, 3 to the casing 1, and spring 55 mounted around each rod 54 being compressed between spring holders 54a and the casing 1 biasing the roller 52 and the supporting shaft 53 in the direction in which the tension of the V-belt 49 is increased. The V-belt is given tension in the manner that the outer circumferential surface of the V-belt 49 is urged by the tension roller 52 with bias force of each spring 55.

The operation of the speed-shifting device is explained below.

In usual condition, the moving member 16 engaging with the fixed pulley 45 through the timing belt 50 trained therebetween is solidly rotated with the input shaft 2 without speed difference since the variable pulley 25 of the speed-shifting pulley mechanism 24 the effective radius of which is kept at the middle value of its range, is not shifted between the V-pulley part 46 of the fixed pulley 45 on the output shaft 3. For this reason, there is no screw motion and the moving member 16 is not moved on the input shaft 2. The transmission ratio between the driving and driven pulleys 5, 7, namely, the input and output shafts 2, 3 is kept constant.

When the device is to be shifted from this condition to the low speed mode by decreasing the transmission ratio between both shafts 2, 3, as shown in Fig.1, the operating lever connected with operation part 40 of the first cam 31 is shifted to the low speed mode. In accordance with this shifting operation of the operating lever, the movable sideplate 26 of the variable pulley 25 is urged in the left direction in the figure away from the fixed sideplate 27, and the effective radius of the veriable pulley 25 is decreased to the minimum value in the variable range. Accordingly, the rotational speed ratio between the variable pulley 25 and the V-pulley part 46 of the fixed pulley 45 is decreased, with the result that the moving member 16 driven by the timing belt 50 at the fixed pulley 45 rotates with lower rotational speed than that of the input shaft 2, and the moving member 16 is moved to the right in the figure on the input shaft 2 through screw motion by the relative rotation in the decelerate direction, and the movable sideplate 7 connected with the moving member 16 is moved from the fixed sideplate 7 to decrease the effective radius of the driving pulley 5. In correspondance with this decrease of the effective radius of the driving pulley 5, the V-belt 15 is drawn toward the driven pulley 9 by the bias force of the spring 14. Then the movable sideplate 11 is urged towards the fixed sideplate 10 by the movement of the V-belt 15, and the effective radius of the driven pulley 9 is increased. As a result, the rotation of the input shaft 2 is transmitted to the input shaft 2 with decelerated speed since the effective radius of the driving pulley 5 is shifted to be smaller than that of the driven pulley 9.

Also, in accordance with screw motion of the moving member 16 in the right axial direction in the figure, the second cam 33 urges the first cam 31 to move the movable sideplate 26 of the variable pulley 25 in the right direction in the figure. Therefore, the effective radius of the variable pulley 25 is brought back to an previous medium value, and the screw motion of the moving member 16 is stopped keeping the transmission ratio between the input and output shafts 2, 3 in the constant low value.

Conversely, when the device is to be shifted to the high speed mode by increasing the transmission ratio between the input and output shafts 2, 3, as shown in Fig.2, the operating lever is shifted to the high speed mode. In accordance with this shifting operation, the movable sideplate 26 is moved in the right didrection in the figure to the fixed sideplate 27 against the bias force of the tension roller 51, and the effective radius of the variable pulley 25 is increased to the maximum value of the variable range. Accordingly, the rotational speed between variable pulley 25 and the V-pulley part 46 of the fixed pulley 45 is increased, with the result that the moving member 16 rotates with the higher rotational speed than that of the input shaft 2. The moving member 16 is moved to the left in the figure on the input shaft 2 through screw motion by the relative rotation in the accelerate direction, and the movable sideplate 7 is moved towards the fixed sideplate 6 to increase the effective radius of the driving pulley 5. In correspondance with this increase of the effective radius of the driving pulley 5, the V-belt 15 is drawn toward the driving pulley 5 against the bias force of the spring 14. Then, the movable sideplate 11 is moved from the fixed sideplate 10 by the movement of the V-belt 15, and the effective radius of the driven pulley 9 is decreased. As a result, the rotation of the input shaft 2 is transmitted to the output shaft 3 at an increased ratio since the effective radius of the driving pulley 5 is increased relative to that of the driven pulley 9.

During this process, the second cam 33 is moved in the left direction with the first cam 31, therefore, the movable sideplate 26 is moved from the fixed sideplate 27 to bring the effective radius of the variable pulley 25 back to the medium value. As a result, screw motion of the moving member 16 is stopped keeping the transmission ratio between both shafts 2, 3 in the constant high value.

Therefore, in a speed-shifting device of this embodiment, the moving member 16 is relatively rotated around the input shaft 2 in advanced or reverse direction by speed-shifting effect between the variable pulley 25 on the input shaft 2 and the V-pulley part 46 of the fixed pulley 45 on the output shaft 3 to axially move the movable sideplate 7 of the driving pulley 5 through screw motion basing thereon. For this reason, a required arrangement for moving the movable sideplate 7 is extremely simple and is easily controlled. Also, speed-shifting process between the input and output shafts 2, 3 can be done smoothly with a small handling force since the moving member 16 is moved by speed-shifting pulley mechanism 24. Moreover, durability of the speed-shifting device is improved since few parts are heated during speed-shifting process.

Further, since the conventionally required high-cost servomotor is not necessary to provide the driving source of the movable sideplate 7 because the movable sideplate 7 is moved axially by utilizing the relative rotation of the input shaft 2 to the moving member 16 mounted thereon, it can be manufactured with low cost.

Moreover, the transmission ratio can be varied in the range corresponding to the moving range of the first cam 31, and at the same time, the transmission ratio between both shafts 2, 3 is settled at that ratio when screw motion of the moving member 16 is stopped automatically since the effective radius of the variable pulley 25 is varied in correspondance with contacting position between the first cam 31 and the second cam 33.

In addition, the first cam 31 in abovementioned embodiment may be operated automatically.

Also, the movable sideplate 7 of the driving pulley 5 provided on the input shaft 2 is arranged to be moved with the moving member 16 in above mentioned embodiment, but the movable sideplate 11 of the driven pulley provided on the output shaft 3 may be arranged to be moved through screw mortion, wherein the same effects can be derived as in abovementioned embodiment.

Furthermore, in abovementioned embodiment, the variable pulley 25 of the speed-shifting pulley mechanism 24 is mounted on the output shaft 3, but those pulleys may be arranged inversely. Also, the fixed pulley 45 is available to be rotatably mounted on another shaft placed parallel to the shafts 2, 3.

Fig.4∼Fig.7 show the second embodiment of this invention. Since basic arrangement of this embodiment is the same as of abovementioned first embodiment. The detail explanation of the same parts equivalent to the first embodiment is omitted with the same reference numerals.

In this second embodiment, the variable pulley 25 of the speed-shifting pulley mechanism 24 is connected to the moving member 16 a screw, not with the cam mechanism as in the first embodiment.

Namely, as a characteristics of this embodiment, as shown in Fig.4∼Fig.6, a jogged cylindrical shaped moving member 16 is in relatively rotatable and axially fixed engagement with boss part 7a of the movable sideplate 7 of the driving pulley 5 through the ball bearing 21. A male screw-thread 18 on the moving member 16 is formed at the opposite side to the driving pulley 5. A cylinder 19 is formed concentrically with the male screw-thread 18 is solidly connected with the moving member 16 at the adjacent part to the toothed pulley 17 and has a female screw 20 formed along an inner circumference thereof radially facing the male screw-thread 18.

A cylindrical fixed sleeve 22 formed so as to surround the male screw-thread 18 of the moving member 16 is fixedly mounted on the input shaft 2 and has a female screw-thread 23 formed along an inner circumference thereof and engaged with the male screw-thread 18 of the moving member 16.

The speed-shifting pulley mechanism 24 is provided with the variable pulley 25 constituting the second pulley member mounted on the fixed sleeve 22 arranged to be fixed for rotation with the input shaft 2. The variable pulley 25 is composed of a first movable sideplate 26 axially slidably and rotatably fixedly mounted on the fixed sleeve 22 (on the input shaft 2) with a key having a cylindrical boss part 26a which is disposed at the inside of the cylinder 19, and a second movable sideplate 28 which is axially slidably and rotatably fixedly mounted on the fixed sleeve 22 by means of a key and which is arranged to face the first movable sideplate 26 and has a cylindrical shaped boss part 28a. The V-shaped belt groove 29 is formed between both sideplates 26, 28.

Also, an outer circumference of the boss part 26a of the first movable sideplate 26 is formed with a male screw-thread 37 for engaging with the female screw-thread 20 of the cylinder 19. Namely, the first movable sideplate 26 is in screw engagement with the moving member 16 through a screw pitch (a screw pitch of the female screw 20 and the male screw 37) smaller than between the moving member 16 and the input shaft 2 (a screw pitch of the female screw 23 and the male screw18).

On the other part, on the outer circumference of the boss part 28a of the second movable sideplate 28, a ring shaped cam member 38 is rotatably mounted on and axially non-slidably connected to the fixed sleeve 22 in screw-threaded engagement therewith through a ball bearing 39, wherein a cam face 38a having a pair of crest parts and trough parts are formd along the side face confronting the casing 1. The cam member 38 has an integrally formed connecting part 40 extending from the outer circumference thereof and connected to the operating lever 42 through a linkage 41, as shown in Fig.7. A pair of free rollers 43, 43 adapted for contacting with a cam face 38a of the cam member 38 are fixed on the casing 1 at the part facing to the cam member 38. The cam member 38 is arranged to be moved axially when rotated relatively to the free rollers 43, 43 through the connecting part 40 by operating the handling lever 42 for changing mode between Lo-position (neutral mode) and the Hi-position (advance mode or reverse mode), as shown in Fig.7. For example, when the operating lever 42 is shifted to Lo position, the cam member 38 is urged to the right in Fig.4 in the manner that the cam member 38 is in contact with the free roller 43, 43 at the trough part of the cam face 38a under the bias force of the belt 49. Conversely, when the operating lever 42 is shifted to Hi position, the cam member 38 is moved to the belt 49 in the manner that the cam member 38 is in contact with the free roller 43, 43 at the crest part of the cam face 38a. At the same time, the effective radius of the variable pulley 25 is adjusted by moving the second movable sideplate 28 towards and away from the first movable sideplate 26.

The speed-shifting characteristics at the time of advancing and reversing can be different from each other when an inlined angle (an angle from the trough part toward the crest part) of the cam face 38a of the cam member 38 from Lo-position to Hi-position of advance mode is different from that from Lo-position to Hi-position of the reverse mode during shifting operation of the operating lever 42.

A fixed shaft 44 is mounted on the casing 1 and placed parallel to the output shaft 3 interposed by the input shaft 2. The fixed pulley 45 is rotatably mounted on the fixed shaft 44 through ball bearings 48, 48, and a V-belt 40 constituting the first belt is trained between the V-pulley part 46 of the fixed pulley 45 and the variable pulley 25.

Therefore, the speed-shifting pulley mechanism 24 is shifted into speed shifting condition by adjusting the effective radius of the variable pulley 25 in the manner that the second movable sideplate 28 of the variable pulley 25 is moved towards and away from the first movable sideplate 26 by the mode change of the operating lever 42. Also, the speed-shifting pulley mechanism 24 is arranged to be stabilized into the constant speed condition in the manner that the first movable sideplate 26 is moved towards and away from the second movable sideplate 28 with smaller movement than of the moving member 16 during speed shifting condition basing on a difference of the screw pitch between the screw of the input shaft 2 and that of the first movable sideplate 26 to the moving member 16.

The operating lever 42 is connected with a mechanism for changing into advance or reverse mode (not shown) arranged so that the last output shaft is rotated in the advance direction when the operating lever 42 is changed into the advance mode and into the reverse direction when it is changed into the reverse mode.

The operation of the speed-shifting device of this embodiment is explained below.

Usually, the speed-shifting pulley mechanism is in the constant speed condition. Therefore, the moving member 16 is not moved without screw motion on the input shaft 2 keeping the transmission ratio constant between the driving and driven pulleys 5, 9 on the input and output shafts 2, 3.

When the device is to be shifted from this condition, for example, into the low speed mode where the transmission ratio between the input and output shafts 2, 3 is decreased as shown in Fig.7, the operating lever 42 is handled in the direction toward Lo-position (neutral mode). In accordance with this mode change of the operating lever 42, the effective radius of the variable pulley 25 is decreased whereby the second movable sideplate 28 which is fixed to the cam member 38 is moved away from the first movable sideplate 26 while the cam member 38 is moved rightward in Fig.5 by a bias force of the bias mechanism 51 to the V-belt 49. Caused by this process, the effective radius of the driving pulley 5 is decreased in the process that the transmission ratio between the variable pulley 25 and the V-pulley part 46 of the fixed pulley 45 is decreased to rotate the moving member 16 with the lower rotational speed than that of the input shaft 2, with the result that the moving member 16 is moved through screw motion in the right direction in the figure on the input shaft 2 and the movable sideplate 7 is moved from the fixed sideplate 6 thereby. In accordance with this decrease of the effective radius of the driving pulley 5, the movable sideplate 11 is moved towards the fixed sideplate 10 to increase the effective radius of the driven pulley 9. In the whole, the rotation of the input shaft 2 is transmitted to the output shaft 3 with decreased speed.

Moreover, accompanied with the screw motion of the moving member 16 in the right direction in the figure, the first movable sideplate 26 is moved in the right direction with a time delay , since the first movable sideplate 26 of the variable pulley 25 is in screw engagement with the moving member 16 by the smaller screw pitch than between the moving member 16 and the input shaft 2 in the cylinder 19. As shown in Fig.4, when the effective radius of the variable pulley 25 is brought back in the previous medium value by the movement of the first movable sideplate 26, screw motion of the moving member 16 is stopped keeping the transmission ratio between the input and output shafts 2, 3 in the constant low value.

On the other hand, when the device is to be shifted into the high speed mode where the transmission ratio between the input and output shaft 2, 3 is increased, the operating lever 42 is changed in the direction toward Hi position. Then, the cam member 38 which is in cam contact with the free rollers 43, 43 fixed on the casing 1 is moved in the left direction in Fig.4 to move the second movable sideplate 28 of the variable pulley 25 towards the first movable sideplate 26, with the result that the effective radius of the variable pulley 25 is increased. Therefore, the transmission ratio between the variable pulley 25 and the V-pulley part 46 of the fixed pulley 45 is increased to rotate the moving member 16 with screw motion to the left in the figure on the input shaft 2, and then, the movable sideplate 7 is moved towards the fixed sideplate 6 to increase the effective radius of the driving pulley 5. In accordance with this increase of the effective radius of the driving pulley 5, the movable sideplate 11 is moved from the fixed sideplate 10 to decrease the effective radius of the driven pulley 9. In the result, the rotation of the input shaft 2 is transmitted to the output shaft 3 with increased speed.

In parallel with this process, accompanied with screw motion of the moving member 16 in the left direction, the first movable sideplate 26 is moved in the left direction in the figure with a time delay . Caused by this, as shown in Fig.5, when the effective radius is brought back to the previous middle value by the movement of the second movable sideplate 28 of the variable pulley 25 from the first movable sideplate 26, screw motion of the moving member 16 is stopped keeping the transmission ratio between the input and output shaft 2, 3 in the constant high value.

In the case of this embodiment, especially, the variable pulley 25 is composed of the first and second movable sideplate 26, 28, wherein the first movable sideplate 26 is in screw engagement with the moving member 16 by smaller pitch than between the moving member 16 and the input shaft 2. Therefore, the transmission ratio between the input and output shafts 2, 3 can be changed in the manner that the second movable sideplate 28 is moved towards and away from the first movable sideplate 26 only by the rotation of the cam member 38 by handling the operating lever 42. Also, since the link length ratio can be increased by moving the movable sideplate 7 of the driving pulley 5 between the low speed mode and the high speed mode, there is an advantage that the handling force of the operating lever 42 is reduced.

Concretely, for example, when the screw pitch between the first movable sideplate 26 and the moving member 16 (the screw pitch of the female screw 20 and the male screw 37) is 10mm and the screw pitch between the moving member 16 and the input shaft 2 (the screw pitch of the female screw 23 and the male screw 18) is 12mm, in the case when a required stroke of the movable sideplate 7 during speed-shifting is 24mm, the movable sideplate 7 can be moved in the required stroke 24mm with a cam stroke 4mm of the cam member 38. When a handling stroke of the operating lever 42 is 200mm, a link length ratio is increased in fifty times.

Moreover, even when the operating lever 42 is handled with higher speed than moving speed of the movable sideplate 7 of the driving pulley 5, large handling force of the operating lever 42 is not required preventing from being extremely increased since the movement thereof occurs through the shift of the transmission ratio of the speed-shifting pulley mechanism 24.

The rotational operation of the cam member 38 in the second embodiment may be controlled automatically. Also, the movable sideplate 11 of the driving pulley 9 on the output shaft 3 may be moved through screw motion, with the same effect as in abovementioned embodiment. Moreover, the fixed pulley 42 may be provided on the output sahft 3, not on the fixed shaft 44.

In this invention, a whole arrangement of a movable sideplate is simplified and is easy to be controlled, also manufacturing cost is lowered, the durability is improved, and the device is prevented from heating at shifting speed, so it can be utilized for a transmission device in motor cycles and agricultural implements and the like providing the pulley type speed-shifting device where rather small driving load is required.

## Claims

1. A speed-shifting device having first and second transmission shafts (2, 3) disposed parallel to each other, a driving pulley (5) and a driven pulley (9) respectively mounted on the two shafts (2, 3) each of which pulleys is composed of a fixed sideplate (6, 10) rotationally and axially fixed to the transmission shaft and a movable sideplate (7, 11) axially slidable and rotationally fixed on the transmission shaft and forming a V-shaped groove with said fixed sideplate, and a belt member (15) extending about said pulleys in engagement with said V-shaped grooves thereof, arranged so that the transmission ratio between the transmission shafts can be changed by varying the effective radius of the engagement of each of said pulleys with the belt member by moving the movable sideplates axially towards and away from the fixed sideplates, a moving member (16) fixed for axial movement with but rotatable relative to the movable sideplate (7) of the pulley on said first transmission shaft, said moving member being rotatable and axially movable relative to said first transmission shaft through screw means, a speed-shifting pulley mechanism (24) operable to adjust the transmission ratio between said transmission shafts (2, 3), characterized in that said mechanism comprises a first pulley member (17) fixed on said moving member, a second pulley member (25) mounted on said first transmission shaft (2) for rotation therewith, a third pulley member (45) which is rotatably mounted on a shaft disposed parallel to said first transmission shaft (2) and consists of two pulley parts (46, 47), a first belt (49) trained between said second pulley member and one (46) of said two pulley parts of said third pulley member (45), and a second belt (50) trained between said first pulley member (17) and the other one (47) of said two pulley parts of said third pulley member, being arranged so that a transmission ratio transmitted through either said first belt (49) or said second belt (50) is changeable, and that under conditions of adjustment of the transmission ratio between said transmission shafts (2, 3), said moving member (16) is rotated about said first transmission shaft (2) in the manner that rotation of said first transmission shaft is transmitted to said moving member with shifted speed through both of said belts.

2. The speed-shifting device of Claim 1 wherein said shaft on which said third pulley member (45) is mounted is said second transmission shaft (3).

3. The speed-shifting device of Claim 1 or Claim 2 wherein said second pulley member (25) has an effective radius which is variable, said one (46) of the two pulley parts of said third pulley member has a fixed effective radius, said other one (47) of said two pulley parts of said third pulley member and said first pulley member (17) have toothed pulley parts, said first belt (49) comprising a V-belt tensioned by a spring-biased roller (51, 52) and said second belt (50) comprising a timing belt, and wherein the rotation of said first transmission shaft (2) is transmitted to said moving member (16) by adjusting the effective radius of said second pulley member (25) with said first belt with shifted speed.

4. The speed-shifting device of Claim 3 wherein said second pulley member (25) comprises a fixed sideplate (27) fixedly mounted on said first transmission shaft (2), a movable sideplate (26) fixed for rotation with but axially slidable relative to said first transmission shaft (2) and forming with the fixed sideplate (27) a V-shaped groove, and a cam mechanism adapted for connecting said movable sideplate (26) to said moving member (16), being composed of a driven cam which is fixed to said moving member (16) for axial movement but rotatable relative to said moving member and which is connected axially movably and non-rotatably to a casing of the speed-shifting device, and a driving cam which is mounted on said movable sideplate (26) for axial movement therewith but rotationally fixed thereto, said cams contacting each other so as to move axially relative to each other with relative rotation.

5. A speed-shifting device as claimed in any one of Claims 1 to 3, wherein the second pulley member (25) has first and second sideplates (29, 28) which are axially slidably movable relative to the first transmission shaft (2), and wherein said first movable sideplate (29) is connected with said moving member (16) by screw engagement having a smaller screw pitch than between said moving member (16) and said first transmission shaft (2), and said second movable sideplate (28) being connected to an operating lever (40) of said mechanism, which lever serves to move said second movable sideplate (28) towards and away from said first movable sideplate (29), said speed-shifting pulley mechanism being arranged so that while said moving member (16) is relatively rotated around the first transmission shaft (2) and axially moved resulting from the transmission of the rotation of said second pulley member (25) thereto with shifted speed through both said belts by changing the effective radius of said second pulley member with said first belt (49) in accordance with the distance between the movable sideplates (28, 29) thereof varied by operation of said operating lever, said speed-shifting pulley mechanism is stabilized on the constant speed condition in the manner that said first movable sideplate (29) is moved towards and away from said second movable sideplate (28) with smaller movement than that of the moving member (16) based on a difference of screw pitch between said screws of said first transmission shaft (2) and of said movable sideplate (7) to said moving member during speed shifting condition thereof.

6. The speed-shifting device of Claim 5 wherein said second movable sideplate (28) is connected to said operating lever (40) axially through a cam member (38) which is moved in cam engagement with a casing and a linking mechanism which is connected with said cam member.

## Patentansprüche

1. Wechselgetriebe
mit einer ersten und einer zweiten Transmissionswelle (2,3), die parallel zueinander angeordnet sind,
mit einer Antriebsscheibe (5) und einer Abtriebsscheibe (9), die auf den zwei Transmissionswellen (2,3) angeordnet sind,
jede der Scheiben besteht aus einer nicht-verschiebbaren Seitenplatte (6, 11), die drehfest und axial feststehend auf den Transmissionswellen befestigt sind, und einer drehfesten, aber axial auf den Transmissionswellen verschiebbaren Seitenplatte (7, 11), die zusammen mit der nicht-verschiebbaren Seitenplatte eine V-förmige Keilrille bildet,
und mit einem Keilriemen (15), der in der V-förmigen Keilrille um die Scheiben umläuft,
wobei das Übersetzungsverhältnis zwischen den Transmissionswellen verändert werden kann durch Änderung des effektiven Radius des Laufkreises der Keilriemen um die Scheiben, indem die verschiebbaren Seitenplatten der Scheiben axial auf die nicht-verschiebbaren Seitenplatten zubewegt oder von diesen hinwegbewegt werden,
mit einer Bewegungsvorrichtung (16), die für die axiale Verschiebung mit der verschiebbaren Seitenplatte (7) der Scheibe auf der ersten Transmissionswelle verbunden, aber relativ zu dieser rotierbar ist,
die Bewegungsvorrichtung ist relativ zu der ersten Transmissionswelle rotierbar und axial verschiebbar und zwar mittels eines Gewindes,
mit einer Mechanik (24) zum Einstellen des Übersetzungsverhältnisses zwischen den Transmissionswellen (2, 3) dadurch gekennzeichnet,
daß die Mechanik ein erstes Scheibenelement (17) aufweist, das an der Bewegungsvorrichtung befestigt ist,
daß ein zweites Scheibenelement (25) auf der ersten Transmissionswelle (2) drehfest angeordnet ist,
daß ein drittes Scheibenelement (45) rotierbar auf einer Welle montiert ist, die parallel zu der ersten Transmissionswelle (2) verläuft und aus zwei Teilen (46, 47) besteht,
daß ein erster Riemen (49) zwischen dem zweiten Scheibenelement und einem (46) der zwei Teile des dritten Scheibenelementes (45) umläuft,
und daß ein zweiter Riemen (50) zwischen dem ersten Scheibenelement (17) und dem anderen (47) der zwei Teile des dritten Scheibenelementes umläuft,
derart, daß ein Übersetzungsverhältnis, das entweder durch den ersten Riemen (49) oder durch den zweiten Riemen (50) gegeben ist, verändert werden kann, und daß für die Einstellung des Übersetzungsverhältnisses zwischen den Transmissionswellen (2, 3) die Bewegungsvorrichtung (16) um die erste Transmissionswelle (2) rotiert wird in der Weise, daß die Rotation der ersten Transmissionswelle auf die Bewegungsvorrichtung übertragen wird mit der durch beide Riemen geänderten Geschwindigkeit.

2. Wechselgetriebe nach Anspruch 1, bei dem die Welle, auf der das dritte Scheibenelement (45) montiert ist, durch die zweite Transmissionswelle (3) gegeben ist.

3. Wechselgetriebe nach Anspruch 1 oder 2, bei dem das zweite Scheibenelement (25) einen effektiven Radius aufweist, der änderbar ist,
das eine (46) der zwei Teile des dritten Scheibenelementes einen festen effektiven Radius aufweist, das andere (47) der zwei Teile des dritten Scheibenelementes und das erste Scheibenelement Verzahnungen aufweisen,
der erste Riemen (49) einen Keilriemen beinhaltet,
der mittels einer federbelasteten Spannrolle (51, 52) gespannt ist,
und der zweite Riemen (50) einen Synchronriemen beinhaltet,
und wobei die Rotation der ersten Transmissionswelle (2) auf die Bewegungsvorrichtung (16) übertragen wird durch Änderung des effektiven Radius des zweiten Scheibenelementes (25) mit dem ersten Riemen mit geänderter Geschwindigkeit.

4. Wechselgetriebe nach Anspruch 1, bei dem
das zweite Scheibenelement (25) eine nicht-verschiebbare Seitenplatte (27) aufweist, die fest auf der ersten Transmissionswelle (2) angeordnet ist,
eine verschiebbare Seitenplatte (26) drehfest, aber relativ zu der ersten Transmissionswelle (2) axial verschiebbar gelagert ist, die zusammen mit der nicht-verschiebbaren Seitenplatte (27) eine V-förmige Keilrille bildet,
und ein Steuermechanismus, der vorgesehen ist, um die verschiebbare Seitenplatte (26) mit der Bewegungsvorrichtung (16) zu verbinden,
und der ein angetriebenes Steuerteil aufweist, das für die axiale Verschiebung an der Bewegungsvorrichtung (16) befestigt ist, aber relativ zu dieser rotierbar ist, und das axial verschiebbar und drehfest mit einem Gehäuseteil des Wechselgetriebes verbunden ist,
und der ein treibendes Steuerteil aufweist, das an der verschiebbaren Seitenplatte (26) drehfest montiert ist, sich jedoch mit dieser axial verschieben kann, wobei beide Steuerteile aneinander anliegen, um
sich entsprechend ihrer relativen Drehung zueinander axial relativ gegeneinander zu verschieben.

5. Wechselgetriebe nach einen der Ansprüche 1 bis 3, bei dem
das zweite Scheibenelement (25) eine erste und eine zweite Seitenplatte (29, 28) aufweist, die relativ zu der ersten Transmissionswelle (2) axial verschiebbar sind,
die erste verschiebbare Seitenplatte (29) ist mit der Bewegungsvorrichtung (16) durch eine Verschraubung verbunden, die eine geringere Gewindesteigung besitzt als die zwischen der Bewegungsvorrichtung (16) und der ersten Transmissionswelle (2), die zweite verschiebbare Seitenplatte (28) ist mit einem Bedienungshebel (40) verbunden,
der Bedienungshebel dient zum verschieben der zweiten verschiebbaren Seitenplatte (28) in Richtung auf oder hinweg von der ersten verschiebbaren Seitenplatte (29),
wobei der Mechanismus derart ausgebildet ist,
daß bei der Relativrotation der Bewegungsvorrichtung (16) um die erste Transmissionswelle (2) und der Axialverschiebung der Bewegungsvorrichtung, die aus der Übertragung der Rotation des zweiten Scheibenelementes (25) mit durch beide Riemen geänderter Geschwindigkeit resultiert infolge der Änderung des effektiven Radius des zweiten Scheibenelementes mit dem ersten Riemen (49) in Abhängigkeit von dem Abstand zwischen den verschiebbaren Seitenplatten (28, 29) durch Betätigen des Bedienungshebels. der Wechselgetriebe-Mechanismus auf eine konstante Geschwindigkeit stabilisiert ist in der Weise, daß die erste verschiebbare Seitenplatte (29) in Richtung auf oder hinweg von der zweiten verschiebbaren Seitenplatte (28) verschoben wird mit einer langsameren Bewegung als die der Bewegungsvorrichtung (16), basierend auf einem Unterschied der Gewindesteigungen zwischen den Verschraubungen der ersten Transmissionswelle (2) und der verschiebbaren Seitenplatte (7) mit der Bewegungsvorrichtung beim Verändern der Geschwindigkeiten.

6. Wechselgetriebe nach Anspruch 5,bei dem die zweite verschiebbare Seitenplatte (28) mit dem Bedienungshebel (40) axial verbunden ist durch ein Steuerelement (38), das bewegt wird durch eine an einem Gehäuseteil anliegende Steuerfläche und einem Verbindungsmechanismus, der mit dem Steuerelement verbunden ist.

## Revendications

1. Dispositif de changement de vitesse ayant un premier et un second arbres de transmission (2, 3) disposés parallèlement l'un à l'autre, une poulie (5) d'entraînement et une poulie (9) entraînée respectivement montées sur les deux arbres (2, 3), chaque poulie étant constituée d'un flanc latéral fixe (6, 10) fixé de manière rotationnelle et axialement sur l'arbre de transmission et un flanc latéral mobile (7, 11) pouvant coulisser axialement sur l'arbre de transmission et fixé pour pouvoir tourner avec ce dernier et formant une gorge ayant une forme de V avec ledit flanc latéral fixe, et un élément (15) formant courroie s'étendant autour desdites poulies en prise avec les gorges en forme de V de celles-ci, agencé de telle sorte que le rapport de transmission entre les arbres de transmission peut être modifié en faisant varier le rayon efficace du contact de chacune desdites poulies avec l'élément formant courroie en déplaçant les flancs latéraux mobiles axialement en direction des flancs latéraux fixes et en les éloignant de ces derniers, un élément (16) de déplacement fixé pour avoir un mouvement axial avec le flanc latéral mobile (7) mais pouvant tourner par rapport au flanc latéral mobile (7) de la poulie située sur ledit premier arbre de transmission, ledit élément de déplacement pouvant tourner et étant mobile axialement par rapport audit premier arbre de transmission par l'intermédiaire de moyens formant vis, un mécanisme (24) formant poulie de changement de vitesse pouvant être actionné pour régler le rapport de transmission entre lesdits arbres de transmission (2, 3), caractérisé en ce que ledit mécanisme est constitué d'un premier élément (17) formant poulie fixé sur ledit élément de déplacement, un deuxième élément (25) formant poulie monté sur ledit premier arbre de transmission (2) pour tourner avec ce dernier, un troisième élément (45) formant poulie qui est monté de manière à pouvoir tourner sur un arbre agencé parallèlement audit premier arbre de transmission (2) et constitué de deux parties formant poulies (46, 47), une première courroie (49) entraînée entre ledit deuxième élément formant poulie et une première (46) desdites deux parties formant poulies dudit troisième élément (45) formant poulie, et une seconde courroie (50) entraînée entre ledit premier élément (17) formant poulie et l'autre (47) desdites deux parties formant poulies dudit troisième élément formant poulie, étant agencé de telle sorte qu'un rapport de transmission transmis par l'intermédiaire de ladite première courroie (49) ou de ladite seconde courroie (50) peut être modifié, et que dans des conditions de réglage du rapport de transmission, ledit élément (16) de déplacement situé entre lesdits arbres de transmission (2, 3) est entraîné en rotation autour dudit premier arbre de transmission (2) de telle sorte que la rotation dudit premier arbre de transmission soit transmise audit élément de déplacement avec une vitesse modifiée par l'intermédiaire des deuxdites courroies.

2. Dispositif de changement de vitesse selon la revendication 1, dans lequel ledit arbre sur lequel est monté ledit troisième élément (45) formant poulie est ledit second arbre de transmission (3).

3. Dispositif de changement de vitesse selon la revendication 1 ou 2, dans lequel ledit deuxième élément(25) formant poulie a un rayon efficace qui est variable, ladite première (46) des deux parties formant poulies dudit troisième élément formant poulie a un rayon efficace fixe, ladite autre (47) des deux parties formant poulies dudit troisième élément de poulie et ledit premier élément (17) formant poulie ont des parties formant poulie dentée, ladite première courroie (49) étant constituée d'une courroie en V tendue par un rouleau (51, 52) rappelé par un ressort et ladite seconde courroie (50) étant constituée d'une courroie dentée, et dans lequel la rotation dudit premier arbre de transmission (2) est transmise avec une vitesse modifiée audit élément (16) de déplacement en réglant le rayon efficace dudit deuxième élément(25) formant poulie muni de ladite première courroie.

4. Dispositif de changement de vitesse selon la revendication 3, dans lequel ledit deuxième élément (25) formant poulie est constitué d'un flanc latéral (27) fixe monté de manière fixe sur ledit premier arbre de transmission (2), un flanc latéral mobile (26) fixé pour tourner avec ledit premier arbre de transmission (2) mais pouvant coulisser axialement par rapport à ce dernier et formant avec le flanc latéral (27) fixe une gorge en forme de V, et un mécanisme à came est adapté pour relier ledit flanc latéral (26) mobile audit élément (16) de déplacement, en étant constitué d'une came entraînée qui est fixée sur ledit élément (16) de déplacement pour avoir un déplacement axial mais pour pouvoir tourner par rapport audit élément de déplacement et qui est reliée de manière mobile axialement et non rotative sur un carter du dispositif de changement de vitesse, et une came entraînante qui est montée sur ledit flanc latéral mobile (26) pour avoir un déplacement axial avec celui-ci mais fixe en rotation par rapport à ce dernier, lesdites cames venant en contact l'une avec l'autre de manière à se déplacer axialement l'une par rapport à l'autre par l'intermédiaire d'une rotation relative.

5. Dispositif de changement de vitesse selon l'une quelconque des revendications 1 à 3, dans lequel le deuxième élément (25) formant poulie a un premier et un second flancs latéraux (29, 28) qui sont mobiles axialement de manière coulissante par rapport au premier arbre (2) de transmission, et dans lequel ledit premier flanc (29) mobile est relié audit élément (16) de déplacement par une prise du type à vis ayant un pas de vis plus petit que celui existant entre ledit élément (16) de déplacement et ledit premier arbre (2) de transmission, et ledit second flanc latéral mobile (28) est relié à un levier (40) d'actionnement dudit mécanisme, lequel levier sert à déplacer ledit second flanc latéral mobile (28) en le rapprochant et en l'éloignant dudit premier flanc latéral mobile (29), ledit mécanisme formant poulie de changement de vitesse étant agencé de telle sorte qu'alors que ledit élément (16) de déplacement est mis en rotation relative autour du premier arbre de transmission (2) et déplacé axialement du fait que la rotation dudit deuxième élément (25) formant poulie est transmise vers celui-ci avec une vitesse modifiée par l'intermédiaire des deux courroies en modifiant le rayon efficace dudit deuxième élément formant poulie par l'intermédiaire de ladite première courroie (49) en fonction de la distance existant entre les flancs latéraux mobiles (28, 29) du deuxième élément qui est modifiée par actionnement dudit levier d'actionnement, ledit mécanisme formant poulie de changement de vitesse est stabilisé dans l'état à vitesse constante par le fait que ledit premier flanc latéral mobile (29) est déplacé en se rapprochant et en s'éloignant dudit second flanc latéral mobile (28) avec un déplacement plus petit que celui de l'élément (16) de déplacement sur la base d'une différence de pas de vis entre lesdites vis dudit premier arbre de transmission (2) et dudit flanc latéral mobile (7) vers ledit élément de déplacement pendant une condition de déplacement de vitesse de ce dernier.

6. Dispositif de changement de vitesse selon la revendication 5, dans lequel ledit second flanc latéral mobile (28) est connecté audit levier d'actionnement (40) axialement par l'intermédiaire d'un élément (38) formant came qui est déplacé en étant en contact de came avec un carter et d'un mécanisme de liaison qui est connecté audit élément formant came.
